# EUROPEAN PATENT APPLICATION

(11) **EP 1 775 922 A1**
(43) Date of publication of application: **18.04.2007**
(21) Application number: 05292125.1
(22) Date of filing: 12.10.2005
(51) Int. Cl.: H04M 1/663

(54) **Methods for allowing or barring incoming calls and for managing subscriber contacts in a communication terminal, associated terminal**

(71) Applicant: LG ELECTRONICS INC., Seoul (KR)
(72) Inventor: Richard, Gilles, 94210 La Varenne Saint Hilaire (FR)
(74) Representative: Le Forestier, Eric

(57) **Abstract**

The present invention relates to a method for handling incoming calls in a communications terminal having processing means and a memory, wherein an incoming call may come from a contact among a plurality of contacts stored in the memory, characterized in that it comprises the step of selectively allowing or barring an incoming call from a given contact among said plurality as a function of an incoming call status (10) value stored in the memory in association with said given contact (A).

The invention also relates to a method for managing contacts in a communications terminal having processing means and a memory, wherein an incoming call may come from a given contact among a plurality of contacts stored in the memory, characterized in that it comprises the step of selectively modifying an incoming call status (10) value in a profile record of the given contact (A).

The invention also relates to a terminal in which the methods are carried out.

## Description

### FIELD OF THE INVENTION

The present invention relates to a method for handling incoming calls in a communications terminal having processing means and a memory, wherein an incoming call may come from a contact among a plurality of contacts stored in the memory.

The invention also relates to a method for managing contacts in a communications terminal having processing means and a memory, wherein an incoming call may come from a given contact among a plurality of contacts stored in the memory.

The invention also relates to a terminal in which the methods are carried out.

### BACKGROUND OF THE INVENTION

Currently, mobile operators offer the possibility to set up incoming call barring on a communication terminal.

The barring comes with two main options.

The first main option is the setting of incoming call barring for all incoming calls. The 3GPP (Third Generation Partnership Project) document TS 22.088 defines the first barring program as BAIC, i.e. Barring of All Incoming Calls.

The second main option is the setting of incoming call barring only when the terminal is in a foreign country, to avoid the increase in the phone bill of a user of the terminal. The 3GPP document TS 22.088 defines the barring program as BIC, i.e. roam Barring of Incoming Calls when roaming outside the PLMN (Public Land Mobile Network) of the home country of the user.

These services are charged by the mobile operators and are called "barring programs".

Of course, a user can set up both options at the same time. The 3GPP document TS 22.088 explains that the barring programs are chosen at provision time.

The barring of all the incoming calls can have drawbacks, when a user wants to bar only certain incoming calls, while allowing other calls for instance.

### SUMMARY OF THE INVENTION

It is an object of the invention to mitigate at least one of the drawbacks of the prior art.

To do so, it is proposed according to the invention a method for allowing or barring incoming calls in a communication terminal according to claim 1.

The dependent method claims recite advantageous but non limiting ways to perform the method of claim 1.

The invention also provides a method for managing contacts in a communications terminal according to claim 16.

The dependent method claims recite advantageous but non limiting ways to perform the method of claim 16.

The invention also provides a terminal capable of allowing or barring incoming calls in a communication terminal, according to claim 25.

Preferred but non limiting aspects of this terminal are recited in the dependent terminal claims.

The invention also provides a terminal capable of modifying an incoming call status value, according to claim 40.

Again, preferred but non limiting aspects of this terminal are recited in the dependent terminal claims.

The invention has numerous advantages.

The invention for instance allows incoming calls from at least one selected phonebook contact and/or group of contacts, while barring other incoming calls.

The invention allows as well a user to customize the time duration for which the incoming calls from a phonebook contact or group of contacts are set to "barred".

The invention allows furthermore a user to have a dedicated voice message for the phonebook contacts for which the incoming calls are set to "barred".

### BRIEF DESCRIPTION OF THE DRAWINGS

Other aspects, objects and advantages of the invention will be better apparent on reading the following description of the invention, made with reference to the accompanying drawings, in which:
- Figure 1 is a schematic representation of an embodiment of a terminal according to the invention;
- Figure 2 is a diagram of the main steps performed by the method according to the invention - this diagram containing different alternatives which can be selected by a user to implement the invention;
- Figure 3 is a schematic representation of a list of contacts which can be displayed on a terminal according to Fig. 1;
- Figure 4 is a schematic representation of a profile record of the contact which can be displayed on a terminal according to Fig. 1;
- Figure 5 is a schematic representation of a selected contact option record which can be displayed on a terminal according to Fig. 1;
- Figure 6 is a schematic representation of an incoming calls record which can be displayed on a terminal according to Fig. 1;
- Figure 7 is a schematic representation of another incoming calls record which can be displayed on a terminal according to Fig. 1;
- Figures 8A and 8B are schematic representations of other incoming calls records showing two different incoming calls status values and which can be displayed on a terminal according to Fig. 1;
- Figure 9 is a schematic representation of a screen which can be displayed on a terminal according to Fig. 1 and asks if a user wants to define a time duration for the barred incoming calls; and
- Figure 10 is a schematic representation of a screen which can be displayed on a terminal according to Fig. 1 and asks if a user wants to define a dedicated voice mail service for the barred incoming calls.

In all the figures, similar elements are referred to with identical numerical references.

### DESCRIPTION OF PREFERRED EMBODIMENTS

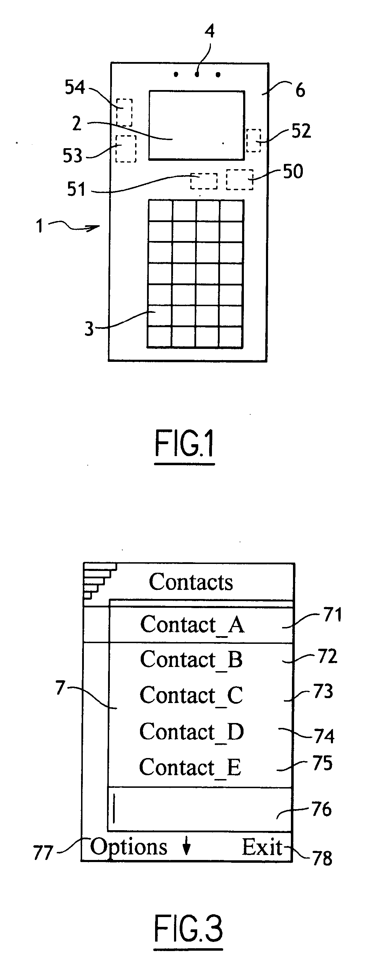

Figure 1 is a schematic representation of an embodiment of a terminal 1 according to the invention.

The terminal 1 comprises a housing 6, display means 2, input means 3, a memory 51 and processing means 50. The terminal 1 also comprises ringing means 4 for indicating incoming calls and rerouting means 52 for indicating to a communication network to reroute incoming calls to a voice mail service of a user of the terminal 1.

The terminal 1 is to advantage a handset for a telephony network, and more precisely a mobile phone, but can be any type of terminal of a communication network, such as a personal assistant, a portable computer, etc.

The display means 2 form to advantage a LCD screen, but can be of any type of screen, such as a plasma screen.

The input means 3 comprise to advantage a keyboard, but can also comprise a touch pad, joysticks, rolls and/or scrolls. The input means 3 allow the user to perform all the selection steps and filling in steps described in further details below.

The ringing means 4 can comprise a speaker, but also a vibrator. In the rest of the specification, the indication of the ringing of the calls can therefore also refer to the vibration of the vibrator.

The rerouting means 52 can indicate to a communication network to bar the incoming calls of a given contact. The barring can be made by an "occupied line" tone or a hang up, for instance.

Preferably, the rerouting means 52 reroute incoming calls to a voice mail service of a user of the terminal 1 when the terminal is busy, or when a barring option according to the invention and described further below is activated.

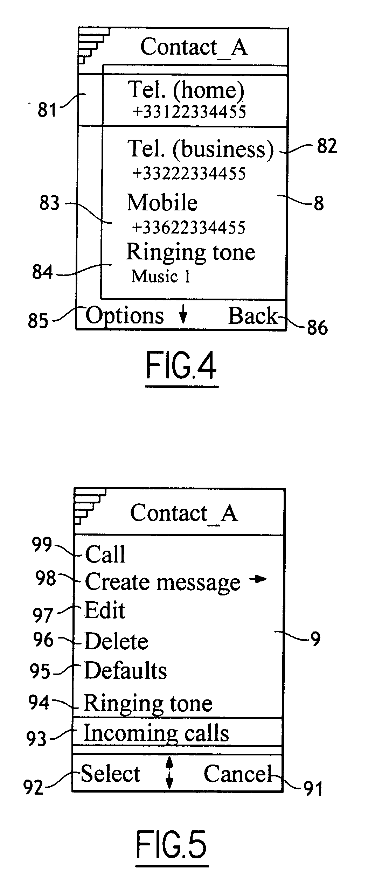

The memory 51 stores at least a list 7 of contacts - contacts A, B, C, D and E shown in Figure 3. In the case of a terminal being a handset or a mobile phone, the list 7 of contacts can be a phone book.

The processing means 50 comprise means for the management of the communications between the terminal and the communication network, and more precisely the calls.

As will be more apparent from the rest of the specification, the processing means 50, the display means 2 and the input means 3 can cooperate to form setting means to set values of the incoming calls status on the terminal and a time duration for such values.

The terminal 1 comprises as well switching means 53 for automatically switching from an incoming call status first value for a given contact stored for a time duration to an incoming call status second value.

The terminal 1 comprises as well registration means 54 for writing the barred incoming calls in a missed calls section of a recent calls log.

Practically, the rerouting means 52, switching means 53 and registration means 54 are at least partially implemented in the processing means 50 and memory 51.

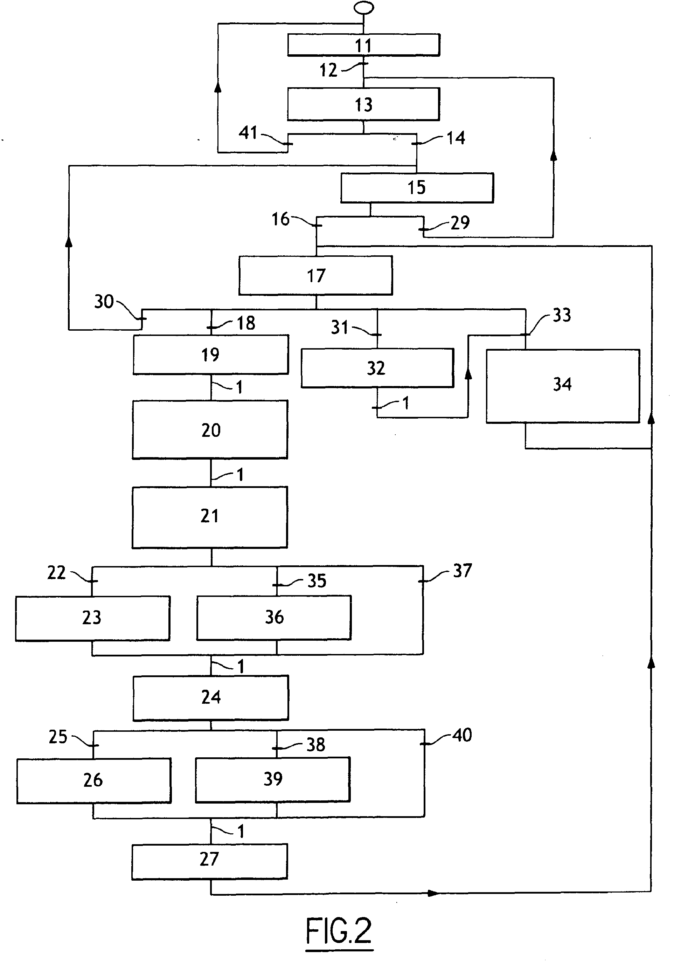

Figure 2 is a diagram of the main steps performed by a method according to the invention.

In step 11, the user of the terminal 1 activates the input means 3 to launch a phonebook application and display the list of contacts on the display means 2. The activation can be a stroke on a specific key for instance.

The screen showing the list of contacts 7, as displayed on the display means 2, is shown in Figure 3.

The list 7 comprises different fields 71, 72, 73, 74 and 75 for the displaying of contacts A, B, C, D and E respectively.

A field 76 enables the user to input a string of characters with the input means 3, to search for a specific contact in the list 7 for instance.

A field 78 can be selected with the input means 3 to exit the list 7 and go back to the previous screen on the display means 2.

In step 12, the user selects a contact, for instance the contact A thanks to the field 71, and then selects an option field 77. The field 77 is called "options" in Figure 3 but can carry any name, such as "select", "OK", etc.

In step 13, the terminal 1 displays the selected contact record. The screen 8 showing the selected contact record, as displayed on the display means 2, is shown in Figure 4.

The selected contact record screen 8 comprises different fields 81, 82, 83 and 84 for the displaying of the characteristics of the selected contact A. The field 81 of the screen 8 comprises for instance the telephone number of the landline of the contact A, the field 82 comprises the telephone number of the office of the contact A, the field 83 comprises the telephone number of the mobile phone of the contact A and the field 84 comprises the name of the ringtone associated to the contact A.

Typically, the name in field 84 indicates the melody of the ringtone when there is an incoming call from the contact A on the terminal.

A field 86 can be selected with the input means 3 to exit the screen 8 and go back to the previous screen on the display means 2. By selecting this field in step 41, the user provokes the return to step 11.

A field 85 enables the user to select an option menu associated with fields 81 to 84.

In step 14, the user selects a field among fields 81 - 85 in the screen 8 with input means 3 and then selects the option menu by selecting the field 85.

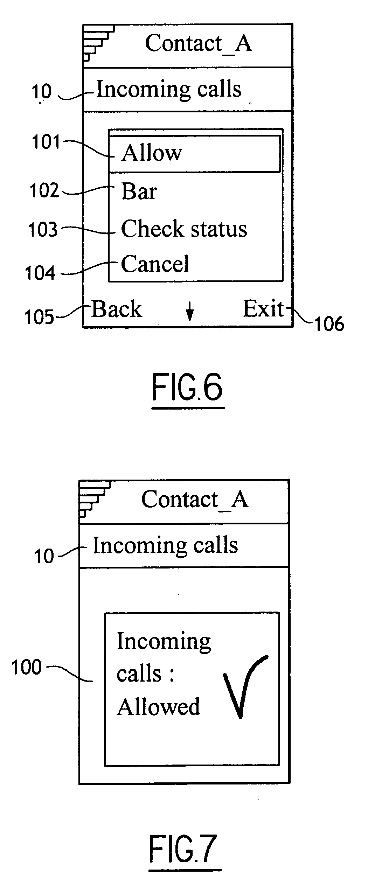

In step 15, the terminal displays a screen 9 associated with the selected contact option record. The screen 9 showing the selected contact option record, as displayed on the display means 2, is shown in Figure 5.

The selected contact option screen 9 comprises different fields 91 to 99 for the displaying of options. The field 99 allows the calling of the corresponding selected contact. The field 98 allows the creation of a message, for instance a message MMS (Multimedia Messaging Service) or SMS (Short Messaging Service). The field 97 allows the edition of the contact, for modifications for instance. The field 96 allows the deletion of the contact. The field 95 allows the setting of the parameters of the contact to default values. The field 94 allows the selection of the ringtone. The field 93 allows the selection of the status of the incoming calls for the contact.

A field 91 can be selected with the input means 3 to exit the screen 9 and go back to the previous screen on the display means 2. By selecting this field in step 29, the user causes the return to step 13.

In step 16, the user selects field 93 with input means 3 and then selects field 92.

In step 17, the terminal 1 displays the selected field in step 16, i.e. a screen 10 including the incoming calls options. The screen 10 including the incoming calls options, as displayed on the display means 2, is shown in Figure 6.

The screen 10 of Figure 6 shows fields 101 to 104 corresponding to options for the incoming call status. Field 101 is selected to allow incoming calls for the contact. Field 102 is selected to bar incoming calls for the contact. Field 103 is selected to check the incoming calls status for the contact, and field 104 is selected to cancel the showing of the screen 10 and can provoke the display of any previously described screen. Fields 103 and 104 are optional. A field 105 can be selected with the input means 3 to exit the incoming call screen 10 and go back to the previous screen on the display means 2. By selecting this field in step 30, the user causes the return to step 15. Fields 104 and 105 can be equivalent.

By selecting the field 102 in step 18, the user can bar the incoming calls for the contact.

In step 19, which is subsequent to step 18, the incoming calls status takes the value "barred". In the specification, the value is named "barred" but could be named "no", "disabled" or any unambiguous term about the incoming calls. The new value is stored in the memory means 51 in a profile record 9 of the contact.

When an incoming call status for a contact has the value "barred", the terminal does not generate any ringtone when the contact tries to call the user. The display means 2 do not show any incoming call. The call is directly rerouted to the voice mail service of the terminal user. The user does not need to explicitly divert the call to his voice mail service. The rerouting is automatic and transparent to the user.

Advantageously, the method comprises a step of writing the barred incoming calls in a missed calls section of a recent calls log.

Note that in Figure 2, the sign '1' means 'true'.

In step 20, which is subsequent to step 19, the terminal 1 displays the new status value for the incoming calls. The screen showing the status could be shown on the display means 2 for a few seconds and then could disappear, or could be on the display means 2 until the user hits a "back" or "exit" button on input means 3.

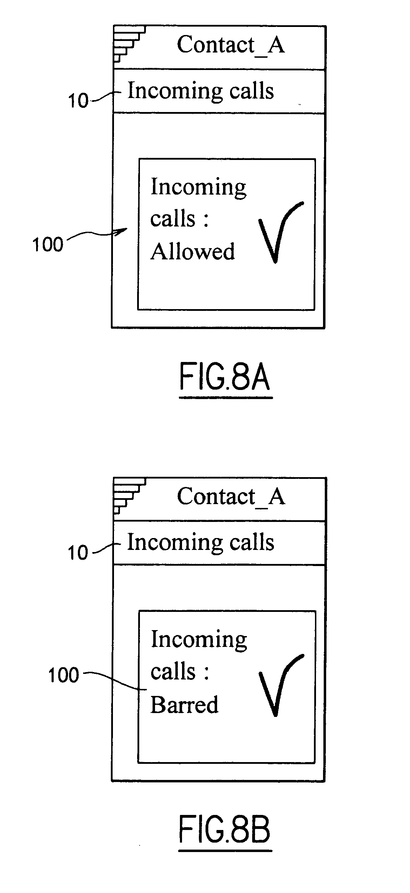

An example of such a screen with a value 100 "allowed" is shown in Figure 7. In the specification, the value is named "allowed" but could be named "yes" or any unambiguous term about the incoming calls. The screen of Figure 7 corresponds to a screen that shows that the incoming calls for a contact are currently allowed.

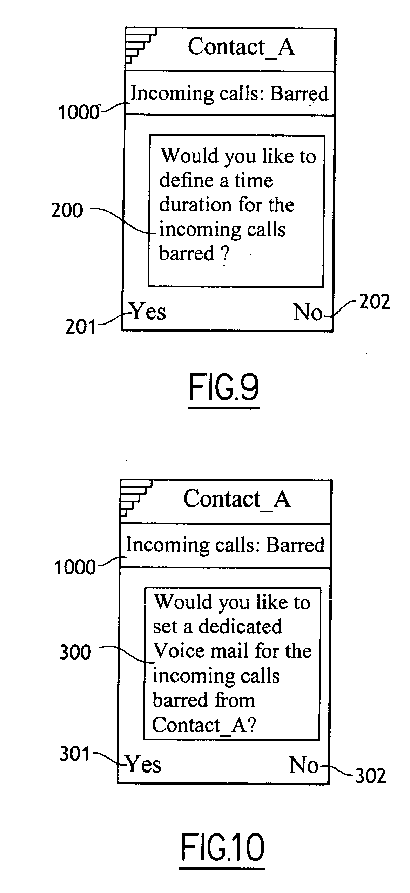

In a step 21, the terminal 1 displays a screen 200 including extra incoming calls options if the incoming calls are barred. The screen 200 including the barred incoming calls options, as displayed on the display means 2, is shown in Figure 9.

The screen 200 of Figure 9 shows a field 1000 showing the incoming calls status value "barred". The screen 200 shows a prompt asking the user if he wants to define a time duration for the incoming calls of the contact to be barred. A field 201 corresponds to a "yes" answer to the prompt, and a field 202 corresponds to a "no" answer to the prompt.

If the answer to prompt 200 is "yes" and the user wants to choose the time duration, then a step 22 is processed.

In step 23, which is subsequent to step 22, a program is run to get the chosen time duration from the user input. A prompt, not shown in the figures, could ask if the user wants to input a time duration with input means. The program enables the user to set the duration of barred incoming calls for a contact to a chosen duration. For example, the user may want certain incoming calls to be barred for one hour, or eight hours, one day; etc.

The barred value is stored for the chosen time duration, and the calls are barred for the chosen time duration.

The barred value is active during the chosen time duration and then automatically switches to the allowed value, thanks to the switching means 53. Once the chosen time duration has elapsed, the incoming calls are allowed again.

If the answer to prompt 200 is "yes" and the user wants to use a default time duration, then step 35 is processed after step 21.

In step 36, which is subsequent to step 35, a first default program is run to get the default time duration of barring calls.

The first default program allows the use and setting of the default time duration of the barring of incoming calls for a contact. A prompt, not shown in the figures, could ask if the user wants to input a barred incoming calls default duration with input means or use a barred incoming calls default duration that is already stored in the terminal. The barred incoming calls default duration could be set to two hours. The default duration can be any duration, and the example is not limiting. The usage of the barred incoming calls default duration is as follows. The terminal user wants to bar incoming calls from a contact for a default duration.

The default duration can be modified at any time by the user.

The barred value is stored for the default duration, and the calls are barred for the default duration. The barred value is active during the default time duration and then automatically switches to the allowed value thanks to the switching means 53. Once the default duration has elapsed, the incoming calls are allowed again.

If the answer to prompt 200 is "no", then step 37 is processed after step 21. In step 37, there is no defined time duration at all. The incoming calls will be set to "barred" until the user manually sets it back to "allowed" (see step 31 further below).

After steps 23 or 36 or 37, a step 24 is processed.

In step 24, the terminal 1 displays a screen 300 including extra incoming calls options if the incoming calls are barred. The screen 300 including the barred incoming calls options, as displayed on the display means 2, is shown in Figure 10.

The screen 300 of Figure 10 shows a field 1000 showing the incoming calls status value "barred". The screen 300 shows a prompt asking the user if he wants to define a dedicated voice mail for the incoming calls of the contact to be barred. A field 301 corresponds to a "yes" answer to the prompt, and a field 302 corresponds to a "no" answer to the prompt.

If the answer to prompt 300 is "yes" and the user wants to choose the time duration for which the dedicated voice mail service is to be run, then a step 25 is processed.

In step 26, which is subsequent to step 25, a program is run to get the chosen time duration for the dedicated voice mail service from the user input. A prompt, not shown in the figures, could ask if the user wants to input a time duration with input means. The program enables the user to set the duration of the dedicated voice mail to a chosen duration. For example, the user may want certain incoming calls to be rerouted to the dedicated voice mail service for one hour, or eight hours, etc. The voice mail message can say for instance "I am currently on a plane".

If the answer to prompt 300 is "yes" and the user wants to use a default time duration for the dedicated voice mail, then step 38 is processed after step 24.

In step 39, which is subsequent to step 38, a second default program is run to get the default time duration of dedicated voice mail service.

The second default program allows the use and the setting of the duration of the rerouting to the dedicated voice mail service to a default duration. A prompt, not shown in the figures, could ask if the user wants to input a default time duration with input means or use the voice mail default duration already stored in the terminal. The dedicated voice mail default duration could be set to two hours. The duration can be any duration, and the example is not limiting. The usage of dedicated voice mail default duration is as follows. The terminal user wants to reroute incoming calls from a contact to a dedicated voice mail for a default duration. The voice mail message can say for instance "I am currently in a meeting".

The default duration for the rerouting can be modified at any time by the user.

If the answer to prompt 300 is "no", then step 40 is processed after step 24. The calls are rerouted to the normal voice mail service of the user.

After steps 26 or 39 or 40, a step 27 is processed. In step 27, the display means 2 indicate that at least an incoming call status value is the "barred" value for at least one contact among the plurality of contacts. The indication can be done by a specific sign or icone. A sign could have a similar size as the existing "Bluetooth" sign or the "Keypad_lock" sign.

Step 28 is then processed. Step 28 causes the return to step 17 already described.

By selecting the field 101 in step 31, which is subsequent to step 17, the user can allow the incoming calls for the contact.

In step 32, which is subsequent to step 31, the incoming calls status takes the value "allowed". The new value is stored in the memory means 51 in a profile record 9 of the contact.

By selecting the field 103 in step 33, which is subsequent to step 17, the user can check the incoming calls status value for the contact.

At the end of step 32, step 33 is processed.

In step 34 following step 33, the terminal 1 displays the status value for the incoming calls. The screen showing the status could be shown on the display means 2 for a few seconds and could disappear, or could be shown on the display means 2 until the user hits a "back" or "exit" button on input means 3. Two examples of screen that can be shown in step 34 are represented in Figures 8A and 8B, corresponding to "allowed" and "barred" values respectively.

Step 28, already described, is processed after step 34.

The foregoing explanations apply to a single contact. It should be understood however that one same incoming call status value can be stored in the memory in association with a group of contacts. It is for example possible to bar/allow the calls for all or only some of the contacts of the phonebook.

However, when a phonebook contact has his incoming call status set to a value different from the value of the incoming call status of the group of contacts to which the contact belongs, then the value of the contact should prevail upon the value of the group.

Here below are some practical examples of the use of a terminal processing a method according to the invention.

If during a meeting, the user of the terminal expects a call from a specific phonebook contact, the user is able to bar the calls from all the phonebook contacts, while allowing the incoming calls for the given phonebook contact. In this case, the terminal will generate a ringtone only when the expected incoming call happens. All other calls from the other phonebook contacts will be directed to the voice mail. After the meeting, the user can manually set back the incoming call status to "allowed" for all the contacts of the phonebook.

If during a meeting, the user expects a call from a specific phonebook contact, the user is able to set the incoming call status to "barred" for all the phonebook contacts, and set the time duration to the default time duration. The user then sets the incoming call status of the given phonebook contact to "allowed". In this case, the terminal will generate a ringtone only when the expected incoming call happens. All other calls from the other phonebook contacts will be directed to the voice mail. When the default time duration has expired, the user does not need to manually set back the incoming call status to "allowed", as switching means 53 do it automatically.

If during a meeting, the user expects a call from a specific phonebook contact, the user is able to set the incoming call status to "barred" for all the phonebook contacts, and customize the time duration of the barring to the chosen time duration. The user then sets the incoming call status of the given phonebook contact to "allowed". In this case, the terminal will generate a ringtone only when the expected incoming call happens. All other calls from the other phonebook contacts will be directed to the voice mail. When the chosen time duration has expired, the user does not need to manually set back the incoming call status to "allowed", as switching means 53 do it automatically.

If during a two-hour meeting, the user would like to receive only incoming calls from a specific phonebook contact and to reroute all the other incoming calls to a dedicated voice mail service, the user is able to set the incoming call status to "barred" for all the phonebook contacts. The user then sets the incoming call status of the given phonebook contact to "allowed". Then the user is able to set a dedicated voice mail message for a chosen duration or a default duration of two hours for all the phonebook contacts having the incoming call status set to "barred". The message could say for instance "I am in a meeting between 2pm and 4pm, please leave me a message". In this case, all the calls from the phonebook contacts with the incoming call status set to "barred" will end up hearing the dedicated voice message if they caii during the two-hour time period.

## Claims

1. A method for handling incoming calls in a communications terminal (1) having processing means (50) and a memory (51), wherein an incoming call may come from a contact among a plurality of contacts (A, B, C, D, E) stored in the memory (51), **characterized in that** it comprises the step of selectively allowing or barring an incoming call from a given contact among said plurality as a function of an incoming call status (100) value stored in the memory (51) in association with said given contact.

2. A method according to claim 1, wherein said incoming call status (100) value is the allowing of the incoming call by generating a ringtone on the terminal (1) or the barring of the incoming call.

3. A method according to the preceding claim, wherein the barring is done by rerouting the incoming call to a voice mail service.

4. A method according any of claims 1 to 3, wherein the incoming status (100) value is stored in a profile record (9) of the given contact.

5. A method according to any of claims 1 to 4, further comprising a step of selectively barring the calls for a time duration.

6. A method according to claim 5, wherein the time duration is a default duration.

7. A method according to claim 5 or 6, wherein the time duration is chosen by a user of the terminal.

8. A method according to any of claims 5 to 7, comprising a step of selectively barring incoming calls of the given contact for the time duration, and automatically allowing incoming calls of the given contact once the time duration has elapsed.

9. A method according to any of claims 3 to 8, further comprising a step of selectively associating a dedicated voice mail service to the barring.

10. A method according to claim 9, comprising a step of associating the voice mail for a time duration.

11. A method according to claim 10, wherein the time duration is a default duration.

12. A method according to claim 10 or 11, wherein the time duration is chosen by a user of the terminal.

13. A method according to any of claims 2 to 12, further comprising a step of indicating on display means (2) that at least an incoming call status value is the barring of the incoming call for a contact among the plurality of contacts.

14. A method according to any of claims 2 to 13, further comprising a step of writing the barred incoming calls in a missed calls section of a recent calls log.

15. A method according to any preceding claim, wherein one same incoming call status (100) value is stored in the memory (51) in association with a group of contacts.

16. A method for managing contacts in a communications terminal having processing means (50) and a memory (51), wherein an incoming call may come from a given contact among a plurality of contacts (A, B, C, D, E) stored in the memory (51), **characterized in that** it comprises the step of selectively modifying an incoming call status (100) value in a profile record (9) of the given contact.

17. A method according to the preceding claim, further comprising a step of selectively setting a time duration for a status value.

18. A method according to the preceding claim, wherein the time duration is a default duration.

19. A method according to claim 17 or 18, wherein the time duration is chosen by a user of the terminal.

20. A method according to any of claims 17 to 19, wherein the incoming calls of the given contact are barred for the time duration, the modifying of the incoming call status value being made automatically once the time duration has elapsed.

21. A method according to any of claims 16 to 20, further comprising a step of setting a dedicated voice mail service in association with the barring of the incoming calls of the given contact.

22. A method according to the preceding claim, wherein the setting is for a time duration.

23. A method according to claim 22, wherein the time duration is chosen by a user of the terminal and/or is a default duration.

24. A method according to any of claims 16 to 23, wherein one same incoming call status (100) value is modified in the memory (51) in association with a group of contacts.

25. A terminal (1) comprising processing means (50) and a memory (51) storing contact information for a plurality of contacts (A, B, C, D, E), **characterized in that** it comprises means (50, 52) for selectively allowing or barring an incoming call from a given contact among said plurality as a function of an incoming call status (100) value stored in the memory (51) in association with a given contact.

26. A terminal according to the preceding claim, wherein said incoming call status (100) value is the allowing of the incoming calls via generating a ringtone on the terminal (1) by ringtone generating means (4) or the barring of the incoming call.

27. A terminal according to the preceding claim, comprising rerouting means (52) doing the barring via the rerouting of the incoming call to a voice mail service.

28. A terminal according to any of claims 25 to 27, wherein the incoming status (100) value is stored in a profile record (9) of the contact.

29. A terminal according to any of claims 25 to 28, comprising means (52) for selectively barring the calls for a time duration.

30. A terminal according to the preceding claim, wherein the time duration is a default duration.

31. A terminal according to claim 29 or 30, wherein the time duration is chosen by a user of the terminal.

32. A terminal according to any of claims 29 to 31, comprising means (52) for selectively barring incoming calls of the given contact for the time duration, and switching means (53) for automatically allowing incoming calls of the given contact once the time duration has elapsed.

33. A terminal according to any of claims 27 to 32, further comprising rerouting means (52) for selectively associating a dedicated voice mail service to the barring.

34. A terminal according to the preceding claim, wherein the means (52) associate the voice mail for a time duration.

35. A terminal according to the preceding claim, wherein the time duration is a default duration.

36. A terminal according to claim 34 or 35, wherein the time duration is chosen by a user of the terminal.

37. A terminal according to any of claims 26 to 36, further comprising display means (2) indicating that at least an incoming call status value is the barring of the incoming call for a contact among the plurality of contacts.

38. A terminal according to any of claims 26 to 37, further comprising registration means (54) for writing the barred incoming calls in a missed calls section of a recent calls log.

39. A terminal according to any preceding claim, wherein one same incoming call status (100) value is stored in the memory (51) in association with a group of contacts.

40. A terminal comprising processing means (50) and a memory (51) storing contact information for a plurality of contacts (A, B, C, D, E), **characterized in that** it comprises means (2, 3, 50) for selectively modifying an incoming call status (100) value in a profile record (9) of a given contact.

41. A terminal according to the preceding claim, further comprising means for selectively setting a time duration for a status value.

42. A terminal according to the preceding claim, wherein the time duration is a default duration.

43. A terminal according to claim 41 or 42, wherein the time duration is chosen by a user of the terminal.

44. A terminal according to any of claims 40 to 43, wherein the incoming calls of the given contact are barred for the time duration, the terminal comprising switching means (53) for modifying the incoming call status value automatically once the time duration has elapsed.

45. A terminal according to any of claims 40 to 44, further comprising rerouting means (52) for setting a dedicated voice mail service in association with the barring of the incoming calls of the given contact.

46. A terminal according to the preceding claim, wherein the means (52) associate the voice mail for a time duration.

47. A terminal according to claim 46, wherein the time duration is chosen by a user of the terminal and/or is a default duration.

48. A terminal according to any of claims 40 to 47, wherein one same incoming call status (100) value is modified in the memory (51) in association with a group of contacts.
